# EUROPEAN PATENT APPLICATION

(11) **EP 1 274 195 A1**
(43) Date of publication of application: **08.01.2003**
(21) Application number: 02710480.1
(22) Date of filing: 01.02.2002
(51) Int. Cl.: H04L 9/08, H04L 9/32, G09C 1/00

(54) **CONFIDENTIAL DATA COMMUNICATION METHOD**

(30) Priority: 08.02.2001 JP 2001032832
(71) Applicant: Sega Corporation, Ohta-ku, Tokyo 144-8531 (JP)
(72) Inventor: SAITO, Tomoaki c/o SEGA CORPORATION, Tokyo 144-8531 (JP)
(74) Representative: Billington, Lawrence Emlyn
(86) International application number: JP0200867
(87) International publication number: WO02063823

(57) **Abstract**

Privacy data communication method and system is disclosed, enabling to minimize the possibility of data input attack to a module by masquerading as a control unit and to realize data exchange with a shortest procedure. On a sender side, a transmission data is encrypted with a sender's secret key and a public key corresponding to a receiver's secret key, and on a receiving side, the received data is decrypted with the receiver's secret key and a public key corresponding to a receiver's secret key.

## Description

### FIELD OF THE INVENTION

The present invention relates to a privacy data communication method and more particularly a privacy data communication method and a system when transmitting data between two parties intervened by a third party.

### BACKGROUND OF THE INVENTION

In an open network such as the Internet, privacy data communication employed in an existing electronic transaction system is carried out with such a configuration and procedure as shown below.

When exchanging data, two communication parties have each own secret key and use electronic authentication by means of public key encryption to authenticate the opposite communication party.

Namely, a sender transmits data encrypted with a public key attached thereto and accompanied by an authentication certificate (CA) which an authentication authority, i.e. a third party, issues and with a secret key. Meanwhile, a receiver verifies the authentication certificate by the authentication authority and decrypts the encrypted data using the aforementioned public key attached to the data. Here, the fact of enabling to decrypt the encrypted data using the attached public key makes it possible to confirm that the received data was sent from the sender having the corresponding secret key.

Thereafter both communication parties can perform encrypted communication based on the relationship of mutual trust. However, such a method can only provide mutual authentication during communication or communication related to data. Further, it is necessary to register to a third party such as an authentication authority, and to provide a server therefor.

Meanwhile, distribution of program and data through a network with charge is now carried out for game software or the like. Also in such a case, privacy of program and data (hereinafter referred to as contents) is required. However, in this case, the contents providers do not always own transmission/reception facilities.

In case mutual authentication between the server and the module is required when transmitting contents to a reception terminal (hereafter referred to as module in this description of the present invention) connected to transmission/reception facilities (hereafter referred to as control unit) via a server, the aforementioned method of mutual authentication between the server and the module necessitates a premise that the control unit is trustworthy.

In other words, the security in this case virtually depends on the security of the control unit, and the module cannot ensure the security independently. It is also powerless against a backward time setting in billing information. The control unit alone requests the module to execute a program even after the communication is completed. Even in this situation the module is required to identify the authenticity of the billing information. However, in the prior method, any measures have not been taken into consideration.

### SUMMARY OF THE INVENTION

Accordingly, it is an object of the present invention to provide a private data communication method and a system to solve the aforementioned problem of the prior method.

It is also an object of the present invention to provide a private data communication method and a system enabling to control the contents initiated by a module in a system configuration including server, transmission/reception facilities (control unit) and reception terminal (module) connected to the transmission/reception facilities.

It is also an object of the present invention to provide a private data communication method and a system enabling to minimize the possibility of masquerade as a control unit, or data input attack against a module, by introducing mutual authentication and billing information transmission between the server and the module using mutual privacy data, to exchange data with a shortest procedure.

To attain the aforementioned object, the privacy data communication method and the system according to the present invention provides the following steps: on a sender side, encrypting transmission data using a sender's secret key and a public key corresponding to a receiver's secret key, and thereafter transmitting the encrypted data to the receiver; and on a receiver side, receiving the encrypted data, decrypting this data using the receiver's secret key and further decrypting the data using the public key corresponding to the sender's secret key, to restore to the original data.

As a preferred embodiment of the privacy data communication method and the system, such time information as extracted from a clock on the sender side is attached to the encrypted data to transmit from the sender to the receiver.

As another preferred embodiment of the privacy data communication method and the system, the following steps are provided on the receiver side: preserving time information attached to the received data; comparing the preserved time information with time information output from a clock on the receiver side; and placing restrictions on using the received data when the time output from the clock on the receiver side precedes the preserved time.

As still another preferred embodiment of the present invention, the time information output from the clock on the receiver side is updated at certain intervals using the time output from the own clock.

Further, as another preferred embodiment of the present invention, a mutual privacy data communication system includes one equipment set on the sender side and a plurality of equipment sets on the receiver side. The equipment on the sender side encrypts a transmission data using a sender's secret key and further encrypting the data using a public key corresponding to a secret key of one equipment set among the plurality of equipment sets on the receiver side, to broadcast to the plurality of equipment sets on the receiver side. In the aforementioned one equipment set on the receiver side, the encrypted data transmitted from the equipment on the sender side is received and decrypted using a secret key of the receiver side and further decrypted using a public key corresponding to a secret key of the equipment on the sender side to restore to the original data.

As another preferred embodiment of the present invention, a process of encrypting the transmission data with the sender's secret key is carried out for a portion of transmission data only.

As another preferred embodiment of the present invention, the following steps are provided: receiving a data and validity period information transmitted from a sender; preserving the received data and validity period information together with time information output from a clock on a receiver side; comparing new time information output from the clock on the receiver side with the preserved time information, and if the new time information precedes the preserved time information, placing restrictions on using the preserved data; comparing new time information output from the clock on the receiver side with the preserved time information, and if the new time information succeeds the preserved time information, then further comparing the new time information output from the clock on the receiver side with the preserved validity period information, and if the new information output from the clock on the receiver side succeeds the preserved validity period information, then placing restrictions on using the preserved data.

Further scopes and features of the present invention will become more apparent by the following description of the embodiments with the accompanied drawings.

### BRIEF DESCRIPTION OF THE DRAWINGS

FIG. 1 shows a diagram illustrating the basic concept of the present invention.
FIG. 2 shows a diagram of a first embodiment of the present invention to which the principle of the present invention is applied.
FIG. 3 shows a diagram of a second embodiment of the present invention to which the principle of the present invention is applied.
FIG. 4 shows a system diagram illustrating the operation of the generalized application examples of the present invention including the embodiments shown in FIGS. 2, 3.
FIG. 5 shows an operational flowchart (part 1) illustrating the operation of the embodiment shown in FIG. 4.
FIG. 6 shows an operational flowchart (part 2) illustrating the operation of the embodiment shown in FIG. 4.
FIG. 7 shows an operational flowchart (part 3) illustrating the operation of the embodiment shown in FIG. 4.
FIG. 8 shows a diagram conceptually illustrating a further application example.

### DETAILED DESCRIPTION OF THE PREFERRED EMBODIMENTS

The preferred embodiment of the present invention is described hereinafter referring to the charts and drawings. It is to be noted that the following examples of the embodiments are described for the sake of the explanation of the present invention and therefore the present invention is not limited to apply to the described embodiments.

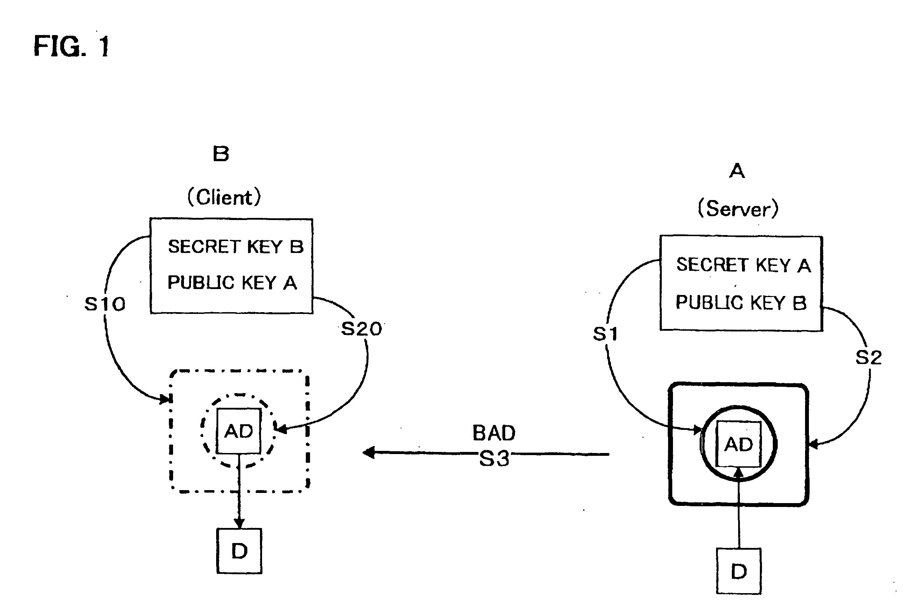

FIG. 1 shows the basic concept of the present invention. When privacy data is transmitted between server A and client B, both server A and client B have public keys respectively corresponding to the private keys of the opposite sides.

Namely, server A and client B respectively owe secret keys A, B. Further, server A owes the public key of client B and client B owes the public key B of server A.

When server A transmits data D to client B, server A encrypts the data using secret key A to obtain an encrypted data AD (step S1). Thereafter server A encrypts the encrypted data AD using public key B of client B to obtain an encrypted data BAD (step S2). Such a double encryption data BAD is transmitted to client B (step S3).

In client B, data decryption is carried out using secret key B of client B, to restore to the encrypted data AD (step S10). Further, data AD is decrypted using public key A of server A to obtain a decrypted data D (step S20).

In such a way, by obtaining data D by decrypting encrypted data BAD in client B, it becomes possible for client B to recognize that data D transmitted from server A is addressed to client B. Such a double encryption is hereafter referred to as a mutual authentication scheme in the description of the present invention.

By this mutual authentication scheme, even when a third party intervenes between server A and client B in the configuration shown in FIG. 1, the encrypted data BDA cannot be read by the third party concerned.

Here, in general, the encryption by a secret key consumes longer time than the encryption by a public key. Accordingly, when data privacy can be maintained even by encrypting partially, it is possible to encrypt only a portion of data D using secret key A in the aforementioned processing (step S1) of obtaining the encrypted data AD by encrypting data D using secret key A of server A.

Also, assuming to conduct multiplex encryption using a plurality of keys, the encryption using either key, irrespective of the secret key or the public key, can be conducted only against a portion of data, because the data privacy may only be achieved as a whole.

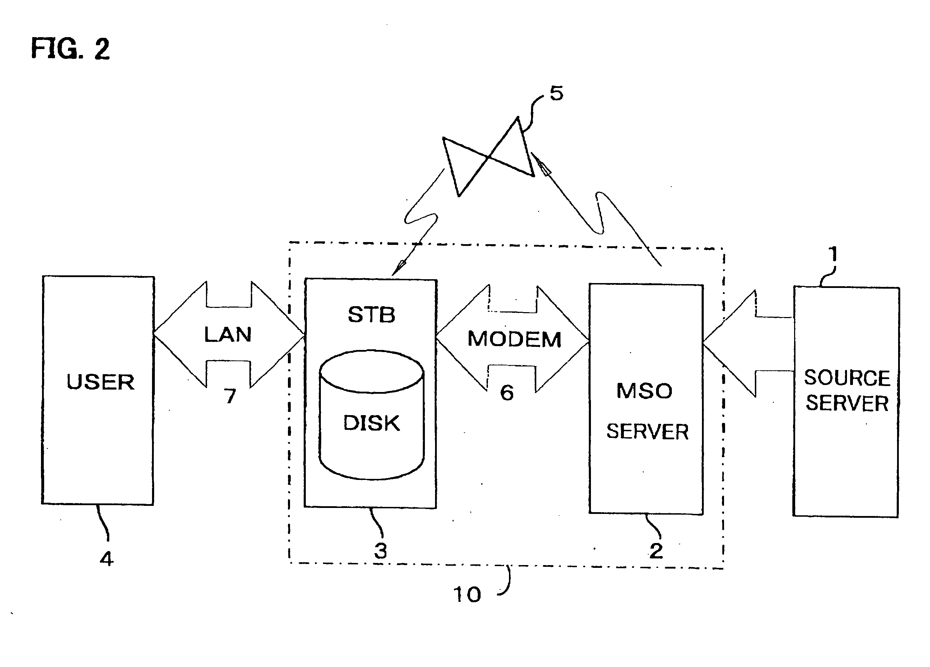

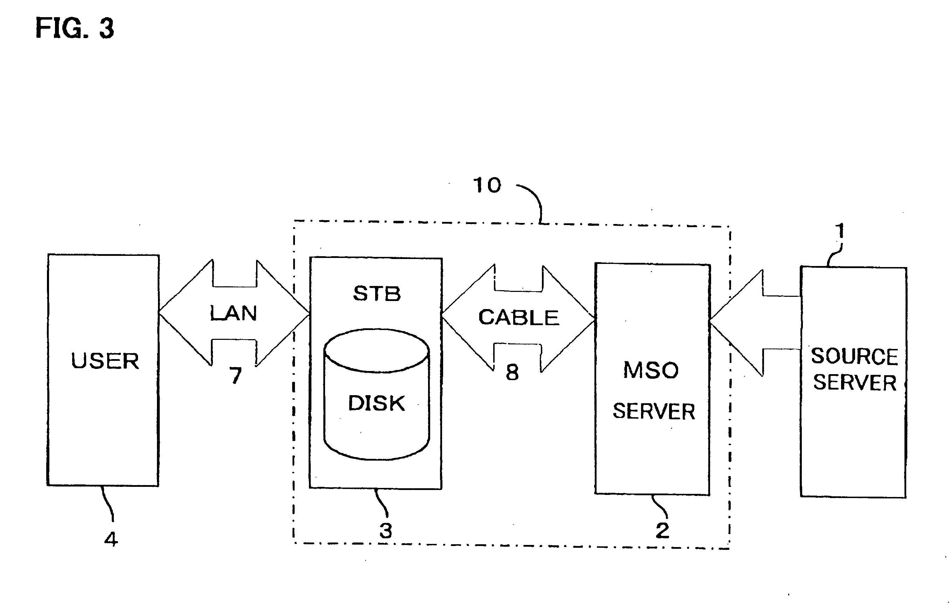

The principle configuration shown in FIG. 1 is applied to system configurations shown in FIGS. 2 and 3 as the embodiments of the present invention. In the embodiment shown in FIG. 2, program data are provided as contents from server 1 to a multiple service operator (MSO) server.

MSO server 2 transmits program data to a set top box (STB) 3 located near a user 4 through a satellite channel 5 or a wireless channel 6. User 4 and STB 3 are connected with a local area network (LAN) 7.

In such embodiments, in the case that a transmission/reception system 10 including MSO server 2 and STB 3 is a different body from source server 1, it is important to guarantee privacy, which is realized by the present invention having a mutual privacy scheme.

The transmission of program and data is carried out by employing the encryption method of the mutual authentication scheme according to the present invention previously explained in FIG. 1. Compared with the configuration shown in FIG. 1, MSO server 2 corresponds to server A, and user 4 corresponds to client B.

STB 3 has a function of a control unit which simply transfers an encrypted data from MSO server 2 to user 4. Accordingly, the mutual authentication scheme may be realized between MSO server 2 and user 4.

FIG. 3 shows another application example of the present invention. The difference from the application example shown in FIG. 2 is that the encrypted data is transmitted through a wired channel 8 between MSO server 2 and STB 3. Other points are identical to the embodiment shown in FIG. 2.

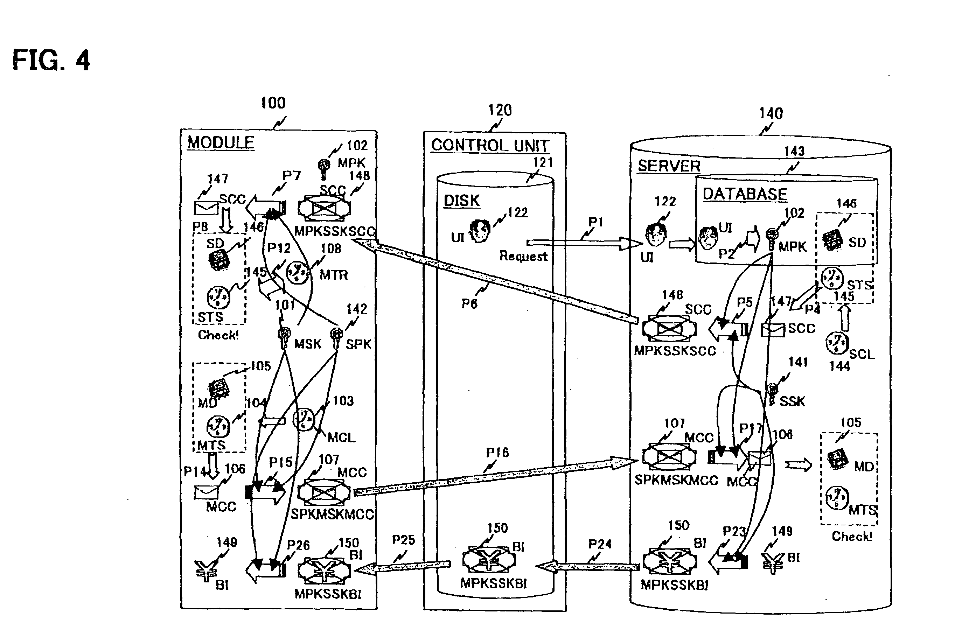

FIG. 4 is a system diagram illustrating the operation in the generalized application examples of the present invention including the embodiments shown in FIGS. 2 and 3. Compared with FIGS. 2 and 3, a server 140 corresponds to MSO server 2, a control unit 120 corresponds to STB 3, and a module 100 corresponds to user 4.

Although server 1 and user 4 are represented with one to one correspondence in FIGS. 2 to 4, the present invention is not limited to this relation. Namely, in the case there are a plurality of users 4, encrypted data are broadcasted from server 1.

As for these encrypted broadcast data, if one user 4 can decrypt the data using its own public key, the encrypted data is known to be a data addressed to the user of interest. Thereafter if the data can be decrypted using the public key of the server, the data is known as transmitted from the server of interest.

This relation is applicable to the following embodiments. It is therefore possible to broadcast data to a plurality of users according to the method of the present invention.

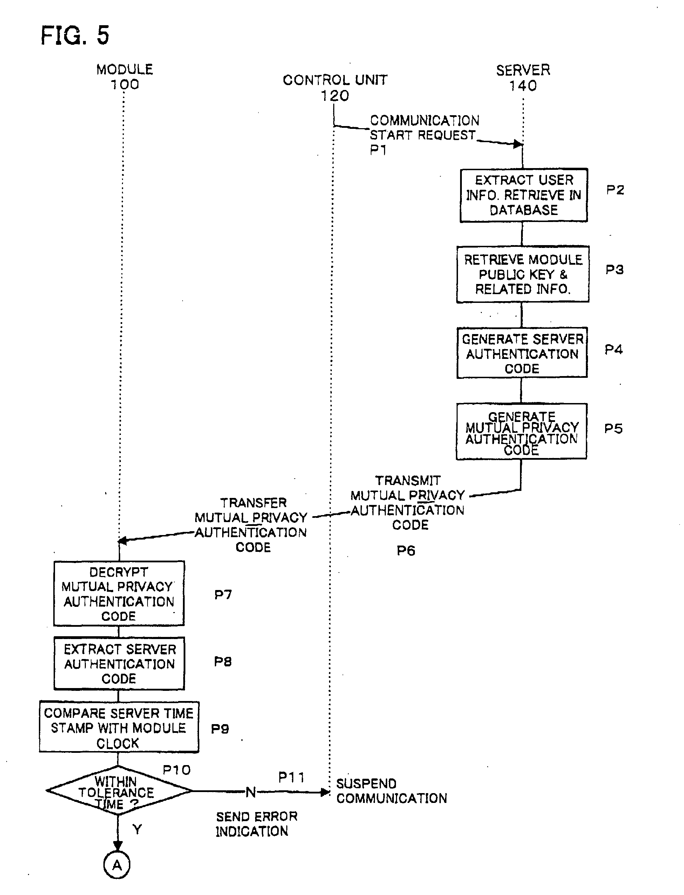

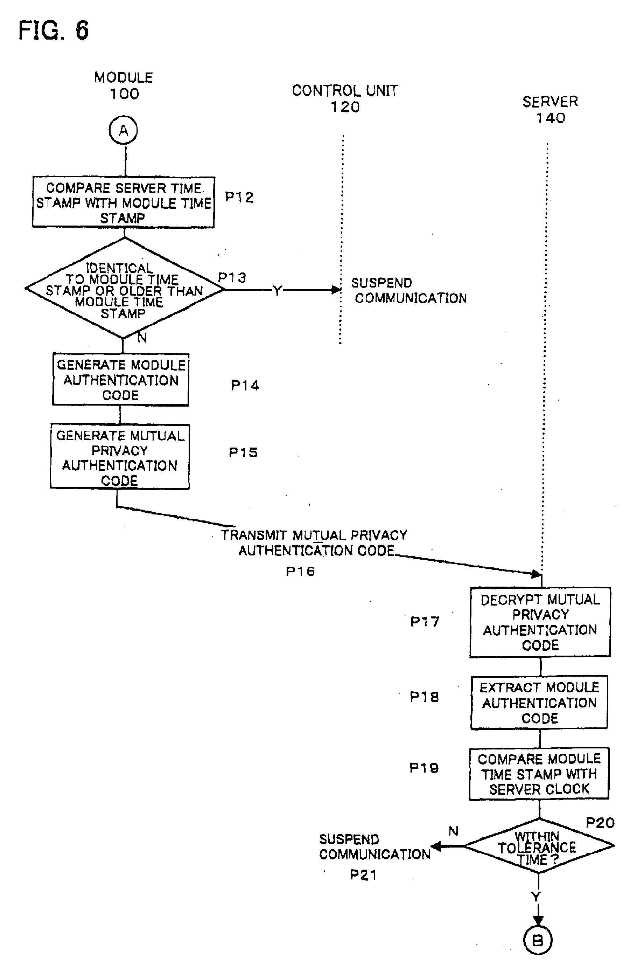

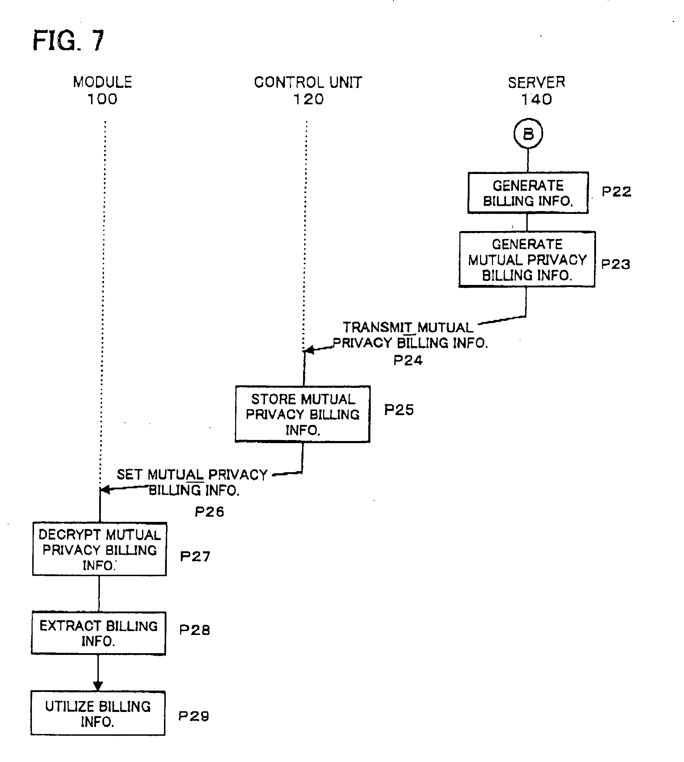

FIGS. 5 to 7 illustrates the operation flowchart illustrating the operation shown in FIG. 4. The operation of FIG. 4 will be described hereafter in accordance with FIGS. 5 to 7.

In FIG. 4, a module 100 and a control unit 120 are connected with a local bus, and control unit 120 and a server 140 are connected through a network.

As a premise, module 100 includes a module secret key (MSK) 101 and a server public key (SPK) 142. Further, module 100 is provided with a module clock (MCL) 103, a time stamp (MTS) generated from module clock 103, and a module data (MD) 105.

Module data (MD) 105 is stored from module 100 to a mutual privacy authentication code (SPKMPKMCC) 107 to forward to server 140.

Mutual privacy authentication code (SPKMPKMCC) 107 transmitted from module 100 to server 140 is generated from module authentication code (MCC) 106.

A module time stamp register (MTR) 108 stores time stamp information of the past.

Control unit 120 embeds a hard disk 121 to store user information (UI) 122.

Meanwhile, server 140 includes a server secret key (SSK) 141, a module public key (MPK) 102, and a user information database 143. Server 140 also includes a server clock (SCL) 144, a server time stamp (STS) 145.

A server data (SD) 146 is stored into a mutual privacy authentication code (MPKSSKSCC) 148 from server 140 to forward to module 100. Mutual privacy authentication code (MPKSSKSCC) 148 is generated from a server authentication code (SCC) 147 to forward to module 100 from server 140.

There is provided billing information (BI) 149 for module 100, which generates mutual privacy billing information (MPKSSKBI) 150 to forward to module 100 from server 140.

In the above description, server secret key (SSK) 141 and server public key (SPK) 142, and also module secret key (MSK) 101 and module public key (MPK) 102 are respectively pairs of keys for use in the public key encryption scheme.

Module 100 incorporates module secret key (MSK) 101 and server public key (SPK) 142 in advance. By incorporating in advance, the authenticity of server public key (SPK) 142 is guaranteed.

Based on user information (UI) 122 from database 143, server 140 retrieves the user's module public key (MPK) 102 and related information (SD) 146 to extract. By incorporating module public key (MPK) 102 in server 140 in advance, the authenticity of module public key (MPK) 102 is guaranteed.

Furthermore, in FIG. 4, alphabetical symbols are assigned for the reference numbers 100 to 108, 122, and 141 to 150 for the sake of identification. Reference numbers 107, 148 and 150 represent mutual privacy data formats. The represented alphabetical symbols means that the contents of the right most alphabetical symbol are encrypted using a secret key of the middle alphabetical symbol, and further the contents are encrypted using the leftmost public key.

For example, mutual privacy authentication code (MPKSSKSCC) 148 means that the server authentication code SCC is encrypted using the server secret key SSK and further is encrypted using the module public key MPK.

The aforementioned mutual privacy data format according to the present invention denotes that the data encrypted using each own secret key 101, 141 is further encrypted using each public key 102, 142 of the opposite party. Other parties than the opposite party which has each secret key 101, 141 cannot read the contents of the encrypted data. Moreover, the opposite party can check the authentication of the sender because the opposite party can decrypt the data using each of the own public key 102, 142.

Further, according to the present invention, it is possible to attach time stamp information 104, 145 as the time information for authentication. In the mutual authentication procedure from server 140 to module 100 or from module 100 to server 140 (procedure P6, P16), in order to generate module time stamp (MTS) 104 and server time stamp (STS) 145 which is available for the authentication, it is necessary that the time in server clock (SCL) 144 coincides with the time in module clock (MCL) 103.

Also, in order to improve the security of mutual authentication, it is necessary for the aforementioned time stamps 104, 145 to provide a tolerance time (on the order of several minutes) to absorb the time error from the time of attaching time stamp to the time of authentication on the receiver side after transmission.

It is a feature of the present invention that module time stamp (MTR) 108 can be updated only when a time succeeding the time stored therein is to be written. In other words it is not possible to write a time of the past.

Module 100 does not work when a time of the past which precedes the time stored in module time stamp register (MTR) 108 is set in module clock (MCL) 103.

Based on the aforementioned premise, the operation of the embodiment shown in FIG. 4 will be described hereafter referring to FIGS. 5 to 7.

First, a communication start request is forwarded from control unit 120 to server 140 (procedure P1). Server 140 extracts user information (UI) 122 from the communication start request to retrieve in database 143 (procedure P2). Thus module public key 102 and the related information (SD) 146 corresponding to user 4 are obtained (procedure P3).

Next, server authentication code (SCC) 147 is obtained from server time stamp (STS) 145 generated from server clock (SCL) 144 in server 140 and information related to the module (SD) 146 (procedure P4).

Server authentication code (SCC) 147 is encrypted using secret key (SSK) 141 of server 140 and then this server authentication code (SCC) 147 encrypted by secret key (SSK) 141 is further encrypted using public key (MPK) 102 of module 100 obtained from database 143. Thus mutual privacy authentication code (MPKSSKSCC) 148 from server 140 having the mutual privacy data format is generated (procedure P5).

Server 140 transmits mutual privacy authentication code (MPKSSKSCC) 148 to control unit 120 (procedure P6).

At this time, control unit 120 cannot look into the contents of mutual privacy authentication code (MPKSSKSCC) 148 received from server 140. Control unit 120 transfers mutual privacy authentication code (MPKSSKSCC) 148 from server 140 to module 100 without any modification before the tolerance time of server time stamp (STS) 145 expires.

Module 100 decrypts mutual privacy authentication code (MPKSSKSCC) 148 received from server 140 using module secret key (MSK) 101 and public key (SPK) 142 of server 100 incorporated in module 100 (procedure P7).

Thus module 100 extracts server authentication code (SCC) 147 (procedure P8). Also at this time, module 100 verifies that mutual privacy authentication code (MPKSSKSCC) 148 is transmitted from the corresponding server 140 having secret key (SSK) 141 of server 140 from the fact that the server authentication code (SCC) 147 can be decrypted using public key (SPK) 142 of server 140.

Thereafter module 100 extracts server time stamp (STS) 145 from server authentication code (SCC) 147 to compare with module clock (MCL) 103 so as to check the time error (procedures P9, P10).

If the time error exceeds the tolerance (N in procedure P10), module 100 sends an error indication to control unit 120 to suspend both the communication and the processing of module 100 (procedure P11).

Meanwhile, if the time error is within the tolerance time (Y in procedure P10), module 100 compares server time stamp (STS) 145 with the contents of module time stamp register (MTR) 108.

If the time in server time stamp (STS) 145 is identical to the time in module time stamp register (MTR) 108 or older than the time in module time stamp register (MTR) 108, then module 100 responds by sending an error notification and suspends both the communication and the further processing thereof (Y in procedure P13).

Meanwhile, if server time stamp (STS) 145 indicates a time which succeeds (i.e. is newer than) the time in module time stamp register (MTR) 108 (N in procedure P13), then module 100 accepts this data and begins to generate mutual privacy authentication code (SPKMSKMCC) 107 to be issued from module 100.

Module 100 generates module authentication code (MCC) 106 using both module time stamp (MTS) 104 generated from module clock (MCL) 103 and module data (MD) 105 (procedure P14).

Thereafter module 100 encrypts module authentication code (MCC) 106 using module secret key (MSK) 101 incorporated in module 100 to encrypt using server public key (SPK) 142 to generate mutual privacy authentication code (SPKMSKMCC) 107 in the form of mutual privacy data format (procedure P15).

Module 100 forwards mutual privacy authentication code (SPKMSKMCC) 107 to control unit 120 (procedure P16). At this time, control unit 120 cannot recognize the contents of mutual privacy authentication code (SPKMSKMCC) 107 from module 100 and transfers mutual privacy authentication code (SPKMSKMCC) 107 from module 100 to server 140 before the time tolerance of module time stamp (MTS) 104 expires.

Server 140 decrypts mutual privacy authentication code (SPKMSKMCC) 107 received from module 100 using server secret key (SSK) 141 and module public key (MPK) 102 incorporated in server 140 (procedure P17), to extract module authentication code (MCC) 106 (procedure P18).

Also at this time, server 140 verifies that mutual privacy authentication code (SPKMSKMCC) 107 is transmitted from module 100 having module secret key (MSK) 101 from the fact that the module authentication code (MCC) 106 can be decrypted using module public key (MPK) 102.

Thereafter server 100 extracts module time stamp (MTS) 104 from module authentication code (MCC) 106, to compare with server clock (SCL) 144 to check whether or not the difference lies within the time tolerance (procedures P19, P20). If the comparison result exceeds the time tolerance (N in procedure P20), server 140 suspends the communication (procedure P21).

Meanwhile, if the comparison result lies within the time tolerance (Y in procedure P20), then server 140 verifies module 100 to permit to generate billing information (BI) 149. For this purpose, server 140 extracts module data (MD) 105 from module authentication code (MCC) 106, based on which billing information (BI) 149 is generated (procedure P22).

This billing information (BI) 149 stores information on the period during which module 100 can use the program/data transmitted from server 140 in an encrypted form, i.e. validity period information. This validity period information may be either an absolute time (date and time, etc. ) or a total time amount available for module 100.

Thereafter server 140 encrypts billing information (BI) 149 using server secret key (SSK) 141, to encrypt using module public key (MPK) 102 further obtained from database 143. Thus server 140 generates mutual privacy billing information (MPKSSKBI) 150 having the mutual privacy data format (procedure P23).

Server 140 then transmits the generated mutual privacy billing information (MPKSSKBI) 150 to control unit 120 (procedure P24). Control unit 120 then stores this mutual privacy billing information (MPKSSKBI) 150 into a hard disk 121 incorporated in control unit 120 (procedure P25).

Control unit 120 sets mutual privacy billing information (MPKSSKBI) 150 into module 100 when using module 100 (procedure P25).

However, control unit 120 cannot look into the contents of mutual privacy billing information (MPKSSKBI) 150, which can be used only by module 100 having module secret key (MSK) 101.

Module 100 decrypts mutual privacy billing information (MPKSSKBI) 150 (procedure P26), to extract billing information (BI) 149 (procedure P27). Module 100 can verify this billing information (BI) 149 is sent from server 140 from the fact that the billing information (BI) 149 can be decrypted using server public key (SPK) 142.

Module 100 utilizes billing information (BI) 149 using module clock (MCL) 103, the contents of module time stamp register (MTR) 108 and algorithm for updating module time stamp register (MTR) 108 (procedure P28).

Hereafter, the update algorithm of module time stamp register (MTR) 108 will be described.

Module time stamp register (MTR) 108 is updated at the timing of the following three events: when performing mutual authentication with server 140; when starting to use the contents after the billing information (BI) authentication; and during using the contents.

### [When performing mutual authentication with server 140]

When performing mutual authentication with server 140, it is necessary that clock (MCL) 103 in module 100 and clock (SCL) 144 in server 140 coincide with each other within the range of predetermined time tolerance.

If server clock (SCL) 144 is supposed to be accurate, then module clock (MCL) 103 is also considered accurate.

Also, the value of module time stamp register (MTR) 108 is updated at the time of authentication. This guarantees that, at the time of obtaining mutual privacy billing information (MPKSSKBI) 150, module time stamp register (MTR) 108 indicates a time not older than the time of the mutual authentication carried out between module 100 and server 140.

### [When starting to use the contents]

When starting to use the contents, the fact that the contents are available means that the authenticity of billing information (BI) 149 is verified by module 100.

This also means that the time in module clock (MCL) 103 specifies within the validity period included in billing information (BI) 149. At this time, the time in module clock (MCL) 103 is set into module time stamp register (MTR) 108.

It can be considered that the time of using the contents succeeds (i.e. is newer than) the time of mutual authentication with server 140. Module time stamp register (MTR) 108 is updated using this timing.

### [During using the contents]

It can be considered that the time during which the contents are in use succeeds the time of starting to use the contents. While the contents are in use, a content usage time is added or overwritten onto module time stamp register (MTR) 108. Here, the time may be either an absolute time or an actual usage time.

Such addition or overwriting of usage time enables to update time stamp register (MTR) 108 without exceeding the current time in the validity period.

Therefore, it is not possible for a user to conduct illegal use by illegally altering module clock (MCL) 103, for example, by setting the module clock time back to a time of the past, thus intending to extend content use time. The above is applied to any cases of updating module time stamp register (MTR) 108 when performing the mutual authentication with server 140, starting to use the contents after the authentication of bill information (BI), and during use of the contents. Whenever module clock (MCL) 103 is set backward to a time preceding the time updated in time stamp register (MTR) 108, such illegal alteration can be detected easily.

Thus, by performing mutual authentication at a data level between server 140 and module 100 using the mutual privacy data format, the aforementioned method makes it difficult to attack for decoding module secret key (MSK) 101. Also the method produces an effect of suppressing illegal use of billing information (BI) 149 in a structure which allows to analyze communication data by a third party as well as to set the time in the arbitrary settable module clock (MCL) 103 backward.

The aforementioned encryption using secret keys 101, 141 of module and server in the mutual privacy data generation (procedures P5, P15 and P23) is to enable an opposite party to authenticate the party of interest by decrypting the data using each public key 102, 142 corresponding to each secret key of the party concerned (procedures P7, P17 and P26). For this purpose, an identical effect can be achieved even when encrypting a portion of data, instead of encrypting a whole data.

In addition, control unit 120 may be integrated with module 100 into one unit, which can produce the same effect.

Further, though a procedure for downloading the contents has not been explained in the above description, the downloading to disk 121 of control unit 120 may be carried out either at the time of communication from server 140 to module 100 (procedure P6), or on completion of mutual authentication through communication from module 100 to server 140 (procedure P16). Otherwise, in the case of contents distribution via a satellite 5 as shown in FIG. 2, user 4 may receive content broadcast after selection without mutual authentication, to store into hard disk 121 incorporated in control unit 120.

In the above-mentioned method, a validity period of the time stamp in the mutual authentication is determined against a request from each module side for use.

Moreover, server 140 may transmits data to module 100 by adding validity period information. In this case, module 100 stores the received data and the validity period information therein, as well as the time output from the own clock.

Thereafter module 100 compares the new time output from the own clock with the time previously recorded, to update to the aforementioned new time when the new time output from the own clock succeeds the time previously recorded. Meanwhile, when the new time of interest precedes the time previously recorded, then the time is not updated.

Thus, it is possible to prevent a case that the data exceeding the actual validity period becomes usable as a result of the clock in module 100 being set backward to a past time for some reason, producing a case that the time does not reach the validity period specified by server 140.

Accordingly, as a result of comparing the new time in the clock of the receiver side with the time preserved, when the new time precedes the time preserved, use of the aforementioned preserved data is restricted.

Further, it is possible to provide the following method: As a result of comparing the new time in the clock of the receiver side with the aforementioned preserved time, if the new time succeeds the preserved time, the new time in the clock of the receiver side is further compared with the preserved validity period information. If the new time precedes the time preserved in the validity period information, use of the preserved data is restricted.

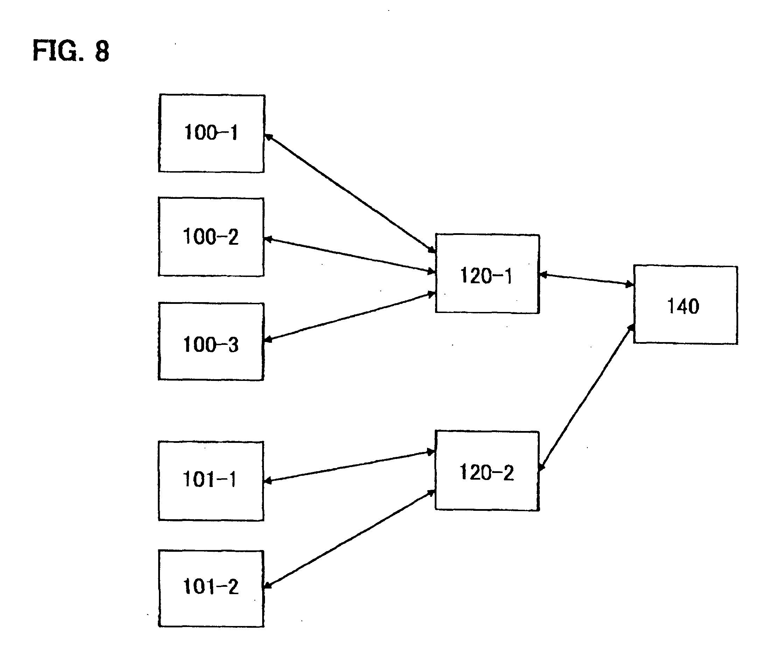

FIG. 8 shows a conceptual diagram for illustrating a further application example of the present invention. In the foregoing embodiment, module 110, control unit 120 and server 140 are shown as single equipment respectively. However, the application of the present invention is not limited to such an embodiment.

In FIG. 8, there is shown a configuration that a plurality of control units 120-1, 120-2, each connecting a plurality of modules 100-1 to 100-3, 101-1 to 101-2, are connected to a single server 140.

The mutual authentication method of the present invention is realized when module 100 has the own secret key and the public key of server 140, and also server 140 has the own secret key and the public key of module 100.

Accordingly, one-to-one connection becomes possible between a server and a module in which the above-mentioned relation is satisfied. Therefore, even when a plurality of modules 100-1 to 100-3, 101-1 to 101-2 are connected to control units 120-1, 120-2 respectively, one-to-one privacy data transmission is possible between a server and a module by mutual authentication.

Also, because the mutual authentication scheme is realized when module 100 has both the own secret key and the public key of server 140 and also server 140 has both the own secret key and the public key of module 100, the module security collapses when the secret key of server 140 becomes no more secret.

Accordingly, it is possible to intensify the degree of security by providing a plurality of public keys in module 100 to use by turns.

### INDUSTRIAL APPLICABILITY

As the embodiments of the present invention have been described referring to the drawings, the present invention provides a mutual authentication scheme to perform mutual authentication and billing information transmission between a server and a module. This enables to minimize the possibility of data input attack to a module by masquerading as a control unit and to realize data exchange with a shortest procedure.

More specifically, a feature of present invention is that the mutual privacy data incorporates a time stamp as well as data in the self-authentication data which can only be used by a receiver. And the mutual authentication and data communication can be carried out in one round trip in the shortest case.

Here, the control unit intervening between the authentication server and the module can only mediates data transmission and reception and cannot conduct any illegal action. Further, by using the time stamp, it becomes possible to prevent the module clock from being set backward.

## Claims

1. Equipment provided on a sender side in mutual privacy data communication comprising:
a means for encrypting a transmission data using a sender's secret key and a public key corresponding to a receiver's secret key; and
a means for transmitting the encrypted data to the receiver.

2. The equipment provided on a sender side in mutual privacy data communication according to claim 1,
wherein encryption of the transmission data with the sender's secret key provided in the encryption means is carried out for a portion of the transmission data only.

3. Equipment provided on a receiver side in mutual privacy data communication comprising:
a means for receiving a data encrypted with a seder's secret key and a public key corresponding to a receiver's secret key of the receiver side; and
a means for decrypting the received encryption data using the receiver's secret key and the public key corresponding to the sender's secret key to restore to a data before encryption.

4. A privacy data communication method comprising the steps of:
encrypting a transmission data using a sender's secret key;
further encrypting the encrypted data using a public key corresponding to a receiver's secret key; and
thereafter transmitting the encrypted data to the receiver.

5. The privacy data communication method according to claim 4,
wherein a process of encrypting the transmission data with the sender's secret key is carried out for a portion of the transmission data only.

6. The privacy data communication method according to claim 4,
wherein time information extracted from a clock on the sender side is attached to the encrypted data to transmit from the sender to the receiver.

7. A privacy data communication method comprising the steps of:
receiving a data encrypted with a sender's secret key and further encrypted with a public key corresponding to a receiver's secret key;
decrypting the received encryption data using the receiver's secret key; and
decrypting the data using the public key corresponding to the sender's secret key, to restore to a data before encryption.

8. In a system for data communication between a sender and a receiver, a reception data management method on the receiver side comprising the steps of:
preserving time information attached to a data transmitted from the sender;
comparing the preserved time information with time information output from a clock on the receiver side; and
placing restrictions on using the received data when the time information output from the clock on the receiver side precedes the preserved time information.

9. The reception data management method according to claim 8,
wherein the time information output from the clock on the receiver side is updated at certain intervals.

10. A reception data management method comprising the steps of:
receiving a data and validity period information transmitted from a sender;
preserving the received data and the validity period information together with time information output from a clock on a receiver side;
comparing new time information output from the clock on the receiver side with the preserved time information;
placing restrictions on using the preserved data, if the new time information precedes the preserved time information;
comparing the new time information output from the clock on the receiver side with the preserved time information;
further comparing the new time information output from the clock on the receiver side with the preserved validity period information, if the new time information succeeds the preserved time information; and
placing restrictions on using the preserved data, if the new information output from the clock on the receiver side succeeds the preserved validity period information.

11. The reception data management method according to claim 10 wherein the time information output from the clock on the receiver side is updated at certain intervals.

12. A reception data management method comprising the steps of:
receiving a data and validity period information transmitted from a sender;
preserving the received data and the validity period information together with time information output from a clock on a receiver side;
comparing new time information output from the clock on the receiver side with the preserved time information;
placing restrictions on using the preserved data, if the new time information precedes the preserved time information;
comparing new time information read out from the clock on the receiver side with the preserved time information;
comparing the new time information output from the clock on the receiver side with the preserved validity period information, if the new time information succeeds the preserved time information; and
placing restrictions on using the preserved data, if the new information output from the clock on the receiver side precedes the preserved validity period information.

13. A privacy data communication system comprising:
one equipment set on a sender side and a plurality of equipment sets on a receiver side,
wherein the equipment on the sender side encrypts a transmission data using a sender's secret key and further encrypts the data using a public key corresponding to a secret key of one equipment set among the plurality of equipment sets on the receiver side, to broadcast to the plurality of equipment sets on the receiver side, and in the one equipment set on the receiver side, the encrypted data transmitted from the equipment on the sender side is received and decrypted using a receiver's secret key and further decrypted using a public key corresponding to a secret key of the equipment on the sender side to restore the data.
